# EUROPEAN PATENT SPECIFICATION

(11) **EP 0 862 980 B1**
(45) Date of publication and mention of the grant of the patent: **12.06.2002**
(21) Application number: 98100791.7
(22) Date of filing: 19.01.1998
(51) Int. Cl.: B29C 45/43

(54) **A method of stripping moulded plastic parts**
Verfahren zum Strippen
Methode pour denuder

(30) Priority: 03.03.1997 SE 9700752
(43) Date of publication of application: 09.09.1998
(73) Proprietor: Tetra Laval Holdings & Finance SA, 1009 Pully (CH)
(72) Inventor: Harnfeldt, Lars-Olof, 223 61 Lund (SE)
(74) Representative: Forsberg, Lars-Ake

(56) References cited:
- EP-A- 0 079 786
- EP-A- 0 413 927
- WO-A-92/22413
- US-A- 4 653 997
- US-A- 4 994 228
- PATENT ABSTRACTS OF JAPAN vol. 1995, no. 09, 31 October 1995 (1995-10-31) & JP 07 148792 A (SEKISUI CHEM CO LTD), 13 June 1995 (1995-06-13)

## Description

### TECHNICAL FIELD

The present invention relates to a method of avoiding damage or crack formation during initial stripping of plastic parts that are injection moulded using cooperating mould sections, one of which is a mandrel end cooperating with two mould halves that during movement from the mandrel are separated laterally from each other, whereby aspiration of gas under pressure is used to release the moulded plastic part from a mould section.

### BACKGROUND ART

Certain types of packaging containers for liquid contents such as milk, juice or the like comprise a casing of paper/plastic laminate which, at at least one end, is provided with an end wall entirely of plastic. A packaging machine for manufacturing this type of packaging container is disclosed in European Patent EP 413.927. In this type of machine, use is made of a tubular casing which is either manufactured in the machine from web-shaped paper/plastic laminate or is supplied to a magazine in the form of prefabricated flat-laid blanks. The casing is placed on a mandrel whose one free mandrel end constitutes a mould section which, together with two external mould halves, forms a closed mould chamber in which the one end of the casing is located. With the aid of an extruder or some other form of injection device, a determined quantity of plastic is fed into the chamber, whereafter the mould halves are brought to a compression position in which the supplied plastic mass is caused to harden. Thereafter, the mould halves are separated, whereupon the casing or packaging container blank provided with the end wall is removed (or "stripped") by being drawn off the mandrel axially.

In connection with the opening of the mould halves, the distance between the mandrel end and the mould halves increases before the mould halves are separated laterally from one another, in which, in particular when the moulded plastic part includes projecting portions, e.g. opening arrangements or pull rings, there occurs a partly friction-conditioned stretching of the material which causes a partial vacuum between the plastic part and the mandrel end and which may cause crack-formation or other damage. The problem may be partly obviated by allowing the moulded plastic part a longer cooling time, but this acts negatively on machine speeds and, as a result, is not desirable.

There area number of prior art documents addressing different problems with partial vacuum occurring between the mould halves, the plastic part and the mandrel.

On one hand, EP-A-0 079 786, JP-A-07148792, and US-A-4 994 228 address the problems which might arise because of the occurrence of partial vacuum at the initial mould opening between the mould halves and the plastic part. In order to avoid this partial vacuum at the initial opening of the mould, air is supplied either at ambient conditions or with pressure into the space formed between the mould halves and the plastic part.

On the other hand, US-A-4 653 997 and CH-A-687 975 address the problems which might arise because of the occurrence of partial vacuum at the removal of the plastic part from the mandrel. After the mould halves have been removed and the plastic part is to be removed from the mandrel there is a risk that partial vacuum occurs between the plastic part and the mandrel, since the plastic part often closely fits onto the mandrel. In order to avoid this problem with vacuum occurring at the final removal of the plastic part from the mandrel air is supplied either at ambient conditions or with pressure into the space formed between the plastic part and the mandrel.

The above-mentioned prior art documents do not address the problems arising at the initial opening of the mould halves. CH-A-687 975 is at present considered closest prior art and the preamble of claim 1 is based upon the disclosure of this document.

There is thus a general need in the art to provide a method of stripping moulded plastic parts which does not suffer from the above-outlined drawbacks but, despite high speed manufacture and short cycle times, makes for the release or stripping of the plastic parts without these or components of them being exposed to damage or crack formation.

### OBJECTS OF THE INVENTION

One object of the present invention is to realise a method of stripping moulded plastic parts, the method ensuring that the plastic parts remain undamaged even at high production speeds.

A further object of the present invention is to realise a method of stripping moulded plastic parts in injection moulding by means of cooperating mould halves, which makes it possible to separate the mould halves from one another immediately after the injection moulding operation without the injection moulded parts being deformed.

Yet a further object of the present invention is to realise a method of stripping moulded plastic parts which may be reduced into practice at high speed without the occurrence of any vacuum preventing the handling of the plastic parts.

Still a further object of the present invention is to realise a method of stripping moulded plastic parts which, at limited cost, permanently obviates the above-outlined problems and makes for rapid and continuous operation over a lengthy period of time.

### SOLUTION

The above and other objects have been attained according to the present invention in that a method of the type described by way of introduction has been given the characterizing feature that the gas is temporarily introduced between the mandrel end and the moulded plastic part in immediate conjunction with the opening of the mould sections, whereby at least a central area of the moulded plastic part is forced to partly accompany the moulded halves during their initial opening movement.

Preferred embodiments of the method according to the invention have further been given the characterizing features as set forth in the appended subclaims.

### ADVANTAGES

By the aspiration of air between the moulded plastic part and one mould section in connection with the opening of the mould halves, partial vacuum is prevented from occurring whereby stripping of the injection moulded part from the mould halves may be put into effect more readily without the injection moulded part, or portions thereof e.g. projecting opening arrangements or pull rings, being subjected to such stretching that the part is damaged or deformed.

### BRIEF DESCRIPTION OF THE ACCOMPANYING DRAWINGS

One preferred embodiment of the method according to the present invention will now be described in greater detail hereinbelow, with particular reference to the accompanying, schematic Drawings which show only those details essential to an understanding of the present invention. In the accompanying Drawings:
Fig. 1 schematically illustrates, partly in section, a mandrel wheel with associated workstations in a prior art packing machine;
Figs. 2, 3 and 4 show, on a larger scale, partly in section and in stepwise presentation, the method according to the present invention in an apparatus of the type illustrated in Fig. 1; and
Fig. 5 is a perspective view of the upper portion of a packaging container produced according to the present invention.

### DESCRIPTION OF PREFERRED EMBODIMENT

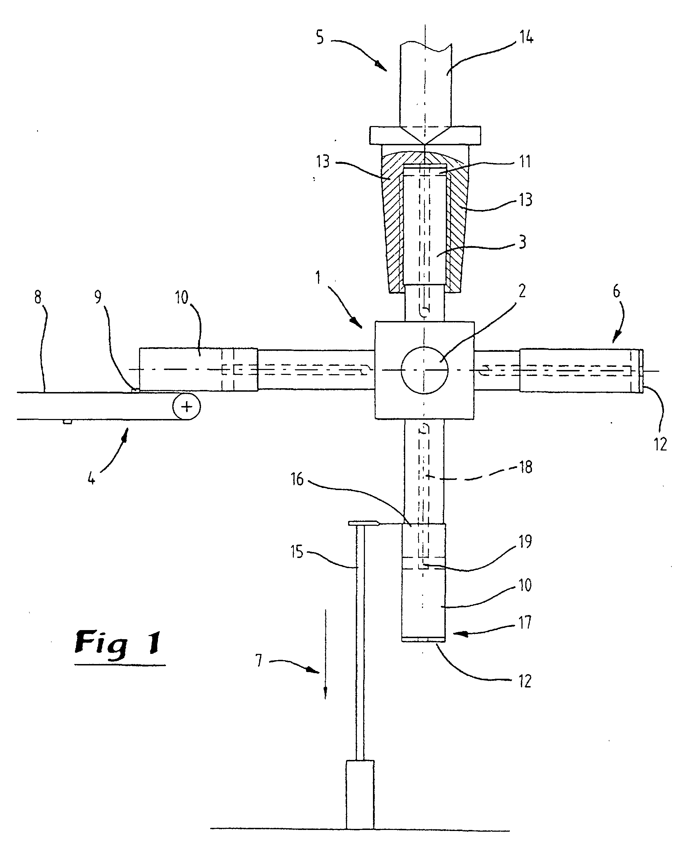

Fig. 1 schematically illustrates a part of a packing machine of the type, for example, which is described in greater detail in European Patent EP 413.927, to which reference is now made. The portion of the packing machine illustrated in Fig. 1 comprises a mandrel wheel 1 which is stepwise rotary about a horizontal mandrel shaft 2. The mandrel wheel 1 comprises four mandrels 3 uniformly disposed about its periphery and which, by stepwise rotation of the mandrel wheel 1 in a clockwise direction, is displaceable between four different stations, viz. an infeed station 4, an injection moulding station 5, a cooling station 6 and a discharge station 7.

The infeed station 4 further includes a conveyor 8 which is provided with carriers 9 so as to make possible the advancement and transfer of one casing 10 at a time to the mandrel 3 instantaneously stationary at the infeed station 4.

As is apparent from Fig. 1, each mandrel is provided with a portion accommodating the casing and a free mandrel end or mould portion 11 which forms a part of an end wall mould which is utilised to provide the casing 10 with an injection moulded end wall 12. Apart from the mould portion, the mould further includes additional mould sections, namely two external mould halves 13 which may be displaced between an open position in which the mandrel wheel 1 may be rotated such that a mandrel 3 may pass the mould halves 13 without hindrance, and a closed position (illustrated in Fig. 1) in which the two external mould halves 13 tightly surround the mandrel 3 or, more correctly, the casing 10 placed on the mandrel 3 and leave only a limited space serving as mould cavity at the free end or core 11 of the mandrel. The external mould halves are directly or indirectly in communication with an extruder 14 or some other injection tool by means of which plastic mass heated to the desired temperature may be supplied at suitable pressure via a channel 13' to the mould cavity formed by the mould halves and the core.

The cooling station 6 shown to the right in Fig. 1 is utilised only to afford the newly moulded end wall 12 the requisite cooling time, in which event the cooling cycle may possibly be accelerated with the aid of positive ventilation or the like. Straight beneath the mandrel shaft 2, there is disposed the discharge station 7 in which a stripper 15, with the aid of a fork 16 surrounding the mandrel 3, is disposed to displace the packaging container blank 17 consisting of the casing 10 and the end wall 12 vertically downwards so that they are removed from the mandrel 3 and are transferred to transport means, for example a conveyor (not shown). The fork 16 is vertically reciprocal with the aid of, for example, a piston and cylinder unit.

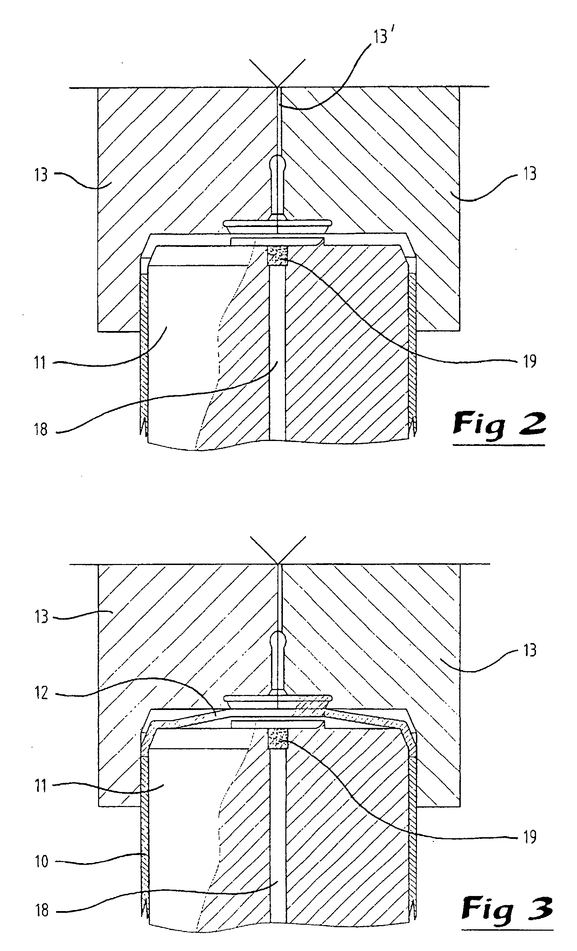

As is apparent from Figs. 1 and 2, the mandrels 3 are provided with an air duct 18 which is intended to communicate the mandrel end with a source of gas or compressed air of conventional type (not shown) via an aperture in the end portion of the mandrels facing towards the mandrel shaft 2. It will be apparent from Fig. 2 how the air duct 18 discharges in the mandrel end 11 or the core via an air-permeable device 19 which is placed in the mouth of the air duct 18. The free end of the air-permeable device is in the form of a substantially planar surface which is located flush with the surface of the mandrel end 11. The material of the air-permeable device may be spherical or irregularly-shaped particles of Nickel-coated bronze of a size (diameter) of 50-500µ.

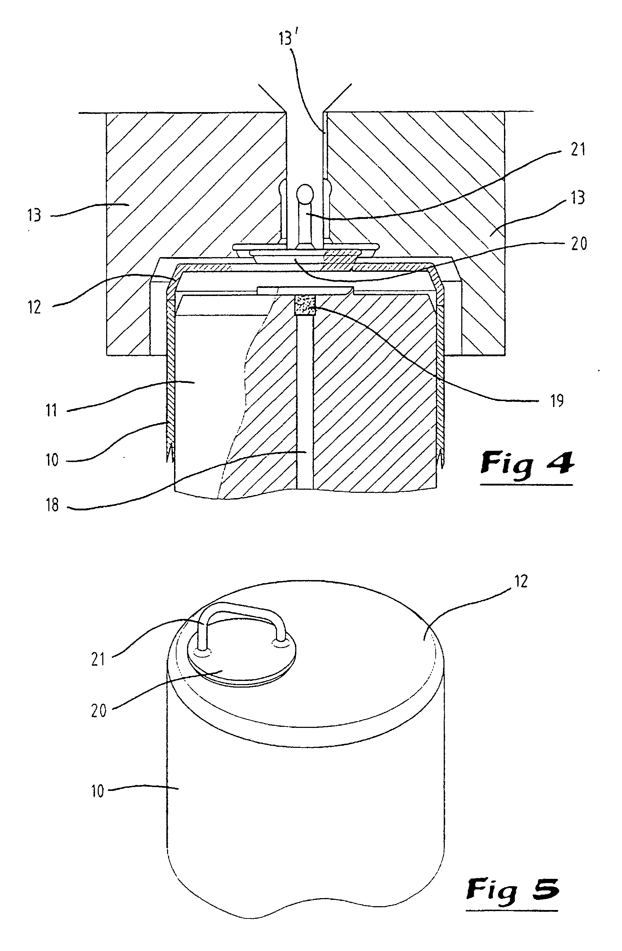

As is particularly apparent from Figs. 2-4 and also Fig. 5, a packaging container of the type which is to be manufactured comprises, in addition to the casing 10 and end wall 12, also an opening arrangement 20 with a projecting pull ring 21 which are manufactured by injection moulding in one piece with the end wall 12. The pull ring 21 has relatively slight cross sectional area and the material (thermoplastic, e.g. polyethylene) will readily break since, immediately after the moulding operation, it has not had time to cool completely. Since the mould halves 13, when the mould is opened, first move in the longitudinal direction of the mandrel 3 (Figs. 3 and 4) and are thereafter separated from one another, in particular the pull ring 21 is exposed to a powerful initial strain which tends to cause crack formation at the anchorage site of the pull ring in the opening arrangement 20. The accurate fit between the mandrel 3 and the casing 10 prevents the central region of the end wall 12, provided with the opening arrangement 20, from being "lifted" from the mandrel end on opening of the mould, since a vacuum immediately occurs, in such instance, at the mandrel end. In order to counteract this vacuum and make it possible for the still warm end wall 12 to bulge out from the mandrel end and thereby reduce the loading on the plastic material (in particular the pull ring 21), it is possible according to the present invention to place the mandrel end in communication - via the air ducts 18 - with a source (tank) of compressed air (not shown) or other gas whereby air is introduced immediately before and during the opening cycle of the mould halves 13. As is particularly apparent from Fig. 3, it will hereby be possible for the end wall 12 to bulge out such that the pull ring may accompany the movement of the mould halves during the time before the transverse separation movement (Fig. 4) of the mould halves.

When the method according to the present invention is reduced into practice in an apparatus, prefabricated casings 10 are applied with the aid of the conveyor 8 on the mandrel 3 of the mandrel wheel located at the infeed station 4. After rotation of the mandrel wheel, the pertinent mandrel 3 with the casing 10 placed thereon is surrounded by the two external mould halves 13. With the mandrel 3 and the mould halves 13 in this position (Fig. 2), the extruder 14 is activated so that the desired quantity of molten plastic material at suitable moulding temperature is introduced into the mould cavity formed by the mould halves 13 and the core 11. The space in the mould is thereafter reduced somewhat in that both of the mould halves 13 are moved closer to the mandrel end (vertically downwards in Fig. 2), so that the molten plastic is compressed and forced to flow out to all parts of the mould, and also come into good contact with the upper end of the casing 10. After closure of the mould halves to the above-mentioned final compression position and completed moulding operation, the duct 18 of the mandrel is now placed in communication with the previously mentioned, per se known source of compressed air or other gas such that air or gas is aspirated via the duct 18 in between the mandrel end and the freshly moulded plastic part or end wall 12 (Fig. 3). There will hereby be formed between the mould half and the portion of the end wall 12 located in contact with this half, a space with gas under pressure, which entails that the end wall or parts thereof, as shown in Fig. 3, are released from contact with the mandrel end and may accompany the mould halves 13 when their movement from the mandrel end is commenced by a movement in the axial direction of the mandrel. This avoids ruptures or other damage to the end wall 12 or parts 20, 21 thereof. Practical trials have shown that just a brief pressure shock (0.1-1 sec. at a pressure of 4-6 bar) has proved to give the desired effect and obviate the risk of damage. The gas is preferably blown in immediately after completed moulding, i.e. as soon as the mould halves have reached the compression position and once again begun to be opened. However, it is also possible to commence the aspiration of air or gas slightly earlier, i.e. immediately before the mould halves are opened. When the mould halves have been opened to maximum position, the mandrel wheel 1 (Fig. 1) is once again rotated so that the packaging container blank 17 reaches the cooling station 6, whereafter, by renewed rotation of the mandrel wheel 1, it is transferred to the discharge station 7 where the fork 16 of the stripper 15 grasps the edge of the packaging container blank 17 facing towards the mandrel shaft 2 and moves it downwards so that it is removed from the mandrel 3. In such instance, there once again occurs a partial vacuum in the "closed" space between the mandrel end/core 11 and the inside of the packaging container blank 17, which is reduced in that ambient air may now flow in via the air duct 18 so that the occurrence of a harmful vacuum between the packaging container blank 17 and the mandrel end is avoided. This feature reduces the risk of damage to the packaging container blank, at the same time as the force required for stripping the blanks is reduced. Since no penetration of molten plastic into the pores of the air-permeable device took place in connection with the injection moulding operation, air may flow without major resistance through the air-permeable device, at the same time as there is no tendency for the injection moulded end wall 12 to adhere to or engage in form-locked fashion in the air-permeable device 19. Since, moreover, the mandrel end 11 (despite the presence of the device 19) is in practice entirely planar, the form of the inside of the end wall will not be affected at all. This design and construction have also proved to function well in practice and ensure adequate function even during lengthy operation. Crack formation or other damage to the injection moulded plastic parts can be wholly avoided even at relatively high production speeds, and the risk of damage to the manufactured end walls is, as a result, no longer a restrictive factor in production output speed.

In order further to facilitate the initial release of the end wall 12 from the surface of the mandrel end 11, it is also possible to supplement the air aspiration with a mechanical device which acts on the underside of the end wall 12 and, for example, is in the form of a plate or piston centrally disposed in the mandrel end, and whose underside is in communication with the air duct 18. The plate or piston will thus be lifted and force the central portion of the end wall out of engagement with the mandrel end when air begins to be supplied via the duct 18.

The present invention should not be considered as restricted to that described above and shown on the Drawings, many modifications being conceivable without departing from the scope of the appended Claims.

## Claims

1. A method of avoiding damage or crack formation during initial stripping of plastic parts (12) that are injection moulded using cooperating mould sections (11, 13), one of which is a mandrel (11) end cooperating with two mould halves (13) that during movement from the mandrel are separated laterally from each other, whereby aspiration of gas under pressure is used in order to release the moulded plastic part from a mould section, **characterized in that** the gas is temporarily introduced between the mandrel end (11) and the moulded plastic part in immediate conjunction with the opening of the mould sections (11, 13), whereby at least a central area of the moulded plastic part is forced to partly accompany the mould halves (13) during their initial opening movement.

2. The method as claimed in claim 1, **characterized in that** the gas is aspirated in in immediate conjunction with the opening of the mould sections (11, 13).

3. The method as claimed in any one or more of claims 1 to 2, **characterized in that** the gas is aspirated in immediately before and during the opening of the mould sections (11, 13).

4. The method as claimed in any one or more of claims 1 to 3, **characterized in that** the gas is aspirated in at a pressure of 4-6 bar.

5. The method as claimed in any one or more of claims 1 to 4, **characterized in that** the gas is compressed air.

## Patentansprüche

1. Verfahren zum Vermeiden von Schäden oder Rißbilding während dem ersten Strippen von Kunststoffteilen (12), die unter Verwendung von zusammenwirkenden Gußformabschnitten (11, 13) spritzgegossen werden, von denen einer ein Dornenende (11) ist, das mit zwei Gußformhälften (13) zusammenwirkt, die während der Bewegung vom Dorn seitlich von einander getrennt werden, wobei Einblasen von Druckgas verwendet wird, um das gegossenen Kunststoffteil von einem Gußformabschnitt zu trennen, **dadurch gekennzeichnet, daß** das Gas zeitweise zwischen dem Dornenende (11) und dem geschmolzenen Kunststoffteil unmittelbar in Zusammenhang mit dem Öffnen der Gußformabschnitte (11, 13) eingeführt wird, wodurch wenigstens ein zentraler Bereich des spritzgegossenen Kunststoffteils gezwungen wird, die Gußformhälften (13) bei ihrer ersten Öffnungsbewegung teilweise zu begleiten.

2. Verfahren nach Anspruch 1, **dadurch gekennzeichnet, daß** das Gas unmittelbar in Zusammenhang mit dem Öffnen der Gußformabschnitte (11, 13) eingeblasen wird.

3. Verfahren nach einem der Ansprüche 1 bis 2 **dadurch gekennzeichnet, daß** das Gas unmittelbar vor und während des Öffnens der Gußformabschnitte (11, 13) eingeblasen wird.

4. Verfahren nach einem der Ansprüche 1 bis 3 **dadurch gekennzeichnet, daß** das Gas bei einem Druck von 4 bis 6 bar eingeblasen wird.

5. Verfahren nach einem der Ansprüche 1 bis 4 **dadurch gekennzeichnet, daß** das Gas Druckluft ist.

## Revendications

1. Procédé pour éviter une détérioration ou une formation de fissure pendant le démoulage initial de pièces en matière plastique (12) qui sont moulées par injection au moyen d'éléments de moule coopérants (11, 13), dont l'un est une extrémité de mandrin (11) qui coopère avec deux demi-moules (13) qui s'éloignent latéralement l'un de l'autre pendant un mouvement à partir du mandrin, dans lequel on utilise une introduction de gaz sous pression pour libérer la pièce en matière plastique moulée d'un élément de moule, **caractérisé en ce que** le gaz est temporairement introduit entre l'extrémité du mandrin (11) et la pièce en matière plastique moulée, en conjonction immédiate avec l'ouverture des éléments de moule (11, 13), de sorte qu'au moins une région centrale de la pièce en matière plastique moulée est forcée d'accompagner partiellement les demi-moules (13) pendant leur mouvement initial d'ouverture.

2. Procédé selon la revendication 1, **caractérisé en ce que** le gaz est introduit en conjonction immédiate avec l'ouverture des éléments de moule (11, 13).

3. Procédé selon une ou plusieurs des revendications 1 et 2, **caractérisé en ce que** le gaz est introduit immédiatement avant et pendant l'ouverture des éléments de moule (11, 13).

4. Procédé selon une ou plusieurs des revendications 1 à 3, **caractérisé en ce que** le gaz est introduit sous une pression de 400 à 600 kPa.

5. Procédé selon une ou plusieurs des revendications 1 à 4, **caractérisé en ce que** le gaz est de l'air comprimé.
